# EUROPÄISCHE PATENTSCHRIFT

(11) **EP 1 613 447 B1**
(45) Veröffentlichungstag und Bekanntmachung des Hinweises auf die Patenterteilung: **19.06.2013**
(21) Anmeldenummer: 04727874.2
(22) Anmeldetag: 16.04.2004
(51) Int. Cl.: B23K 26/36, B21K 5/20, B23K 26/08

(54) **VERFAHREN UND VORRICHTUNG ZUR HERSTELLUNG EINES GESENKS IN EINEM WERKSTÜCK**
METHOD AND DEVICE FOR PRODUCING A CAVITY IN A WORKPIECE
PROCEDE ET DISPOSITIF DE PRODUCTION D'UNE CAVITE DANS UNE PIECE A USINER

(30) Priorität: 16.04.2003 DE 10317579
(43) Veröffentlichungstag der Anmeldung: 11.01.2006
(73) Patentinhaber: Sauer GmbH, 55758 Stipshausen (DE)
(72) Erfinder: HILDEBRAND, Peter, 87459 Pfronten (DE); KUHL, Michael, 87629 Füssen (DE); REISACHER, Martin, 87435 Kempten (DE); STÜRMER, Udo, 87459 Pfonten (DE)
(74) Vertreter: Beetz & Partner
(86) Internationale Anmeldenummer: PCT/EP2004/004054
(87) Internationale Veröffentlichungsnummer: WO 2004/091844

(56) Entgegenhaltungen:
- EP-A- 0 407 969
- WO-A-00/18535
- WO-A-00/19167
- DE-C- 3 923 356
- US-A- 5 782 253
- PATENT ABSTRACTS OF JAPAN Bd. 0182, Nr. 43 (M-1602), 10. Mai 1994 (1994-05-10) & JP 06 031745 A (MATSUSHITA ELECTRIC WORKS LTD), 8. Februar 1994 (1994-02-08)

## Beschreibung

Die Erfindung betrifft ein Verfahren und eine Vorrichtung zur Herstellung eines Gesenks in einem Werkstück gemäß den Oberbegriffen der unabhängigen Patentansprüche. Ein solches Verfahren und eine solche Vorrichtung sind aus der WO 00/ 19167 und der WO 00/ 18535 der gleichen Anmelderin bekannt.

Die angesprochenen Verfahren und Vorrichtungen betreffen dabei insbesondere das "Prototyping" und den Formenbau, wobei Formen und insbesondere Gesenke herzustellen sind, die vergleichsweise klein und mit hoher Genauigkeit herzustellen sind.

Beim Verfahren zur Herstellung eines Gesenks mittels eines Laserstrahls wird ein Laserstrahl im ihm zugänglichen Arbeitsfenster nach Maßgabe von digital abgelegten Formdaten über die ihm zugängliche Arbeitsfläche eines Werkstücks geführt. Dies kann beispielsweise mäandernd oder schraffierend passieren. Die Laserleistung und die sonstigen Parameter sind so eingestellt, dass der einfallende Laserstrahl Material an der Eintrittsstelle teilweise verdampft, so dass es aus der Oberfläche entfernt wird. Auf diese Weise kann der Laser mit geeigneter Ansteuerung schichtweise Material aus der Oberfläche entfernen, so dass so im Laufe der Zeit ein Gesenk entsteht. Die Führung des Lasers und die Einstellung bzw. Steuerung sonstiger Prozessparameter geschieht auch Bezug nehmend auf die digital gespeicherten Gesenkdaten.

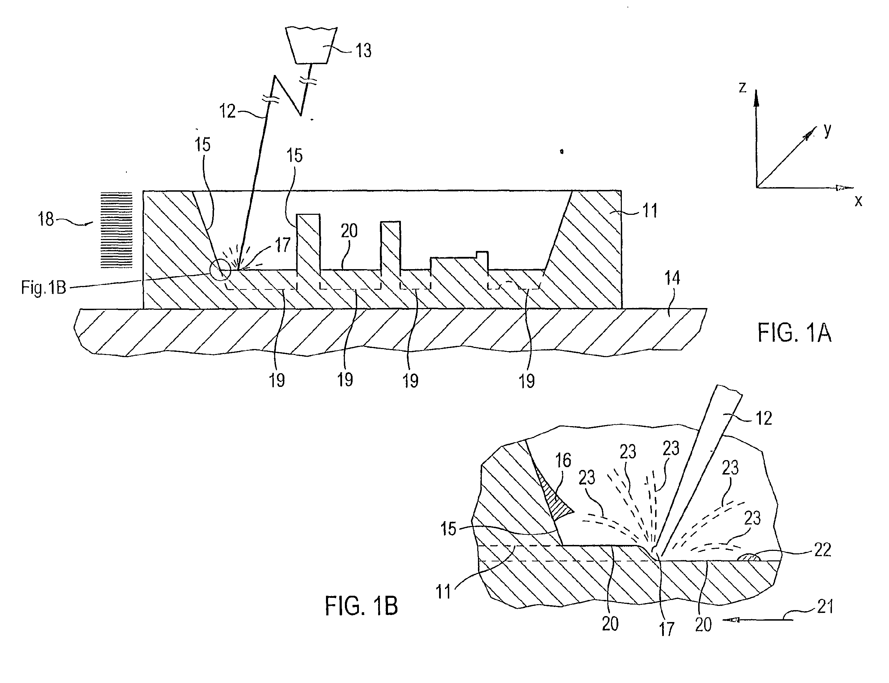

In Fig. 1A sind die obigen Vorgänge schematisch dargestellt. Mit 11 ist ein Werkstück im Schnitt dargestellt. 12 markiert schematisch den Laserstrahl, der einem Laserkopf 13 entspringt. Mit 17 ist schematisch die Auftreffstelle des Laserstrahls auf dem momentanen Gesenkboden dargestellt. Mit 18 sind schematisch die einzelnen bisher schon abgetragenen Schichten angedeutet. Mit 19 sind gestrichelt die endgültig gewünschten Gesenkformen gezeigt. 20 bezeichnet den momentanen Gesenkboden, also das, was derzeit die frei zugängliche Oberfläche des Gesenks ist. Mit 15 sind Seitenwände des Gesenks bezeichnet. Die Darstellung der Fig. 1A ist so, dass zwischen Seitenwand 15 und Gesenkboden 20 wegen der Winkligkeit zwischen beiden gut unterschieden werden kann. Dies muss nicht immer der Fall sein. Allgemein wird im Rahmen dieser Anmeldung unter Seitenwand eine im Gesenk zugängliche Fläche verstanden, die in ihrer z-Koordinate (parallel zur Gesenktiefe) näher am Laserkopf 13 liegt als der Gesenkboden 20. 14 bezeichnet den Werkstücktisch. Fig. 1A zeigt weiterhin die verwendete Koordinatendefinition. Die Zeichenebene ist die xz-Ebene. Senkrecht dazu (diagonal angedeutet) steht die y-Koordinate. Das Arbeitsfenster 10 des Laserstrahls liegt somit in der xy-Ebene.

Fig. 1B zeigt vergrößert Verhältnisse, die beim Laserabtrag an Seitenwänden entstehen können. Der wegen seiner Fokussierung konisch zulaufende Laserstrahl 12 wird in Richtung des Pfeiles 21 über den Gesenkboden 20 geführt. Das dabei verdampfende, aufgeschmolzene und wegspritzende Material, insbesondere Metall, ist durch die "Strahlen" 21 symbolisiert. Teilweise lagert sich insbesondere das wegspritzende Material im Gesenk wieder an. Solches wiederangelagerte Material ist durch die Bezugsziffern 16 (Anlagerung an der Seitenwand 15) und 22 (Anlagerung am Gesenkboden 20) symbolisiert. Anlagerungen 22 am Gesenkboden 20 sind allgemein unschädlich, denn sie werden beim nächsten Durchlauf des Lasers überarbeitet, insbesondere werden sie bei vorhandener Tiefenregelung geregelt entfernt. Anders verhält es sich mit Anlagerungen an der Seitenwand 15. Da diese Seitenwände a priori vom Laserstrahl nicht wieder überarbeitet werden, bleiben Anlagerungen 16 an der Seitenwand bestehen. Darüber hinaus neigen sie zum Wachsen: An eine erste, zufällig entstandene Anlagerung spritzt von unten (vom Gesenkboden 20 her) Material an und lagert sich dort ab. Die Anlagerung wächst damit in Richtung auf den Gesenkboden 20 zu. Sie wächst auch in Richtung Gesenkinneres sowie in Umfangsrichtung des Gesenks. Die Anlagerung ähnelt dann einem Schüttkegel. Solche Anlagerungen können die Qualität des entstandenen Gesenks signifikant verschlechtern.

Außerdem ist aus der DE-C-3923356 ein Verfahren und eine Vorrichtung zum Herstellen von Hohlräumen in massiven Werkstücken mittels eines Laserstrahls bekannt, bei dem das Laserstrahl während jedes linienförmigen Abtragsvorgangs um einen vorgegebenen Winkel geschwenkt und das Werkstück gleichzeitig auf einem Kreisbogen um die Schwenkachse des Laserstrahls synchron hin- und herbewegt wird. Damit wird das Material durch hin- und hergehende Vorschubbewegungen in dicht nebeneinanderliegenden Bahnen vom Laserstrahl erschmolzen und mittels eines Druckfluids entfernt.

Aus der US-A-5782253 ist ein Verfahren und ein System zum Entfernen von einem auf der Oberfläche eines Werkstücks ausgebildeten Material mittels eines Laserstrahls bekannt. Das System kann die entlang des Werkstücks Bewegungsgeschwindigkeit und die Intensität des Laserstrahls steuern.

Aus der JP-A-4237553 ist ein Verfahren zum Entfernen Schlacken aus einem Druckgießen mittels Luftblasen bekannt.

Aufgabe der Erfindung ist es, ein Verfahren und eine Vorrichtung zur Herstellung eines Gesenks in einem Werkstück anzugeben, die die Gesenkbildung mit anlagerungsfreien Seitenwänden erlauben.

Diese Aufgabe wird mit den Merkmalen der unabhängigen Patentansprüche gelöst. Abhängige Patentansprüche sind auf bevorzugte Ausführungsformen der Erfindung gerichtet.

Erfindungsgemäß werden auch die Seitenwände des Gesenks mittels eines Laserstrahls bearbeitet. Der Bearbeitung kann eine Vermessung der Seitenwände vorausgehen, wobei die Seitenwandbearbeitung nach Maßgabe des Vermessungsergebnisses erfolgt. Andererseits kann die Seitenwandbearbeitung auch ohne vorherige Vermessung, "pauschal", erfolgen.

Unter "Seitenwand" kann in einer Ausführungsform dabei die Gesenkbegrenzung ohne den momentanen Gesenkboden verstanden werden. Unter Gesenkboden kann diejenige Fläche verstanden werden, von der ausgehend weiterer Materialabtrag in Tiefenrichtung des Gesenks erfolgt.

Anstelle eines Laserstrahls oder zusätzlich hierzu können die Seitenwände auch mit einem Bearbeitungsmittel, etwa einem Ätzmittel oder einem Partikelstrahl, oder unter Verwendung von Trockeneis und/oder Ultraschall bearbeitet werden.

Die Seitenwandbearbeitung kann über die gesamte Gesenktiefe oder einen Teil davon und über den gesamten Gesenkumfang oder über einen Teil davon erfolgen.

Die Seitenwandbearbeitung kann mit verminderter Laserleistung und/ oder an der Auftreffstelle defokusiert erfolgen.

Die Seitenwandbearbeitung kann insbesondere der Entfernung von Material dienen, das sich während der Gesenkbildung an den schon stehenden Seitenwänden wieder angelagert hat, aber auch anderen Zwecken. Die erfindungsgemäß zu bearbeitende Seitenwand kann mehr oder minder stark geneigt sein. Ihr Übergang zum momentanen Gesenkboden kann bei sehr flachen Neigungen fließend sein. Soweit die Seitenwandbearbeitung angesprochen wird, kann dies auch umfassen, dass der Gesenkboden mit bearbeitet wird, es kann aber auch bedeuten, dass ausschließlich die Seitenwand bearbeitet wird.

Nachfolgend werden Bezug nehmend auf die Zeichnungen einzelne Ausführungsformen der Erfindung beschrieben, es zeigen:
- Fig. 1A und B: bekannte Verhältnisse,
- Fig. 2: das erfindungsgemäße Vorgehen,
- Fig. 3: eine erfindungsgemäße Steuerung, und
- Fig. 4: schematisch eine Vorrichtung zur Anwendung eines Bearbeitungsmittels bei der Seitenwandbearbeitung.

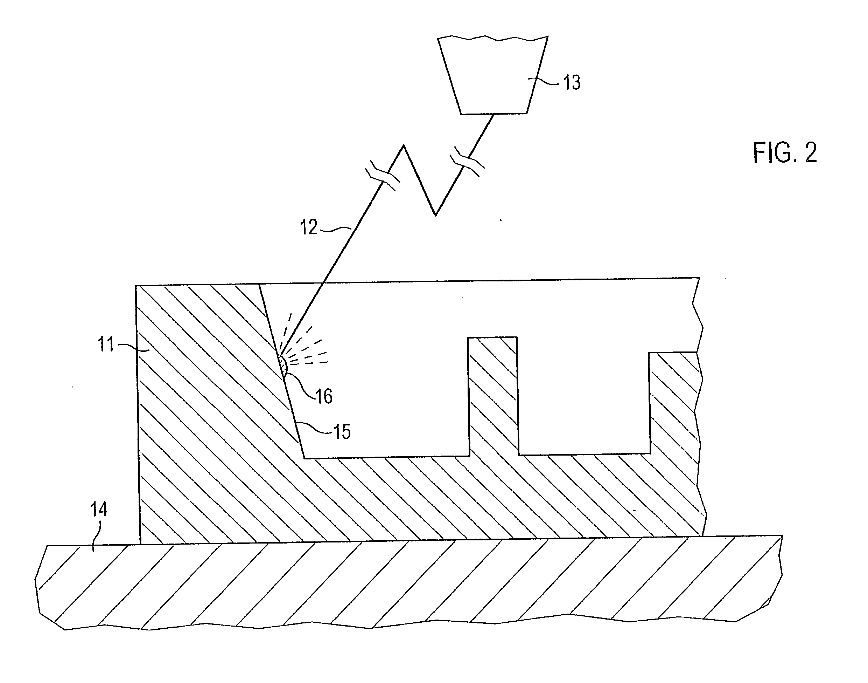

Fig. 2 zeigt ein Werkstück schematisch, das dem aus Fig. 1A ähnelt. Gleiche Bezugsziffern wie in Fig. 1 bezeichnen gleiche Merkmale. Der Laserstrahl 12 ist als auf die Seitenwand 15 auftreffend dargestellt. Unter dem Laserstrahl 12 wird eine Anlagerung 16 angenommen, die durch den Laserstrahl 12 entfernt wird, so dass die Seitenwand wieder die ursprünglich vorgesehene Form hat.

Es hat sich herausgestellt, dass die Anlagerungen 16 andere Eigenschaften gegenüber dem Laserstrahl oder gegenüber Bearbeitungsmitteln wie Partikelstrahl oder Ätzmittel oder Trockeneis oder Ultraschall haben können als das ursprünglich vorhandene Material des Werkstücks 11. Insbesondere ist das wiederangelagerte Material 16 dem Laserstrahl 12 oder dem Bearbeitungsmittel gegenüber weniger "widerstandsfähig" als das ursprüngliche Material des Werkstücks 11. Dies kann man sich dahingehend zunutze machen, dass die Seitenwandbearbeitung so erfolgt, dass das "Vollmaterial" (also das ursprünglich als Seitenwand 15 stehengelassene Material des Werkstücks 11) durch den Laserstrahl 12 nicht weiter abgetragen wird. Dies kann man auf verschiedene Weisen erreichen, beispielsweise indem der Laserstrahl schneller über die Fläche geführt wird, so dass weniger Energie pro Fläche eingestrahlt wird, oder dass die Laserleistung reduziert wird, oder dass der Laserstrahl defokussiert auf die Seitenwand auftrifft. Letzteres ist bevorzugt. Es kann aber auch eine Kombination der obigen Maßnahmen gewählt werden. Bei defokussierter Arbeitsweise kann die vorgesehene Arbeitsstelle des Lasers intrafokal (Auftreffpunkt zwischen Laserkopf 13 und Fokuspunkt des Laserstrahls) oder extrafokal liegen.

Die Ansteuerung des Lasers 12 bzw. des Laserkopfs 13 zur Seitenwandbearbeitung erfolgt nach Maßgabe der Gesenkdaten durch eine Steuerung. Die Steuerung hat Zugriff auf die Gesenkdaten, so dass auch insbesondere die Seitenwandkoordinaten punktweise nach x-und γ- und z-Koordinate erfolgen kann.

Die Seitenwandbearbeitung kann einmal oder mehrmals bei der Herstellung eines Gesenks erfolgen. Beispielsweise kann jeweils nach 10 (allgemein nach n), n > = 1 jeweils vom Gesenkboden 20 abgetragenen Schichten ein Seitenwandbearbeitungsdurchgang erfolgen. Denkbar ist auch, die Seitenwandbearbeitung einmal ganz am Ende der Gesenkbildung vorzunehmen.

Die Seitenwandbearbeitung kann über die gesamte Tiefe des Gesenks (also vom Gesenkboden 20 bis "hinauf" zur Oberkante des Gesenks) oder nur über einen Teilbereich erfolgen. Auch in Umfangsrichtung kann die Seitenwandbearbeitung ganz oder teilweise erfolgen. Beispielsweise kann die Frage, welche Teile der Seitenwand bearbeitet werden, davon abhängig gemacht werden, wie sehr die jeweilige Seitenwand zu Anlagerungen neigt. Steile Seitenwände neigen eher zu Anlagerungen als sehr flache. Somit kann die Wandneigung zu einem Kriterium für die Frage der Seitenwandbearbeitung herangezogen werden.

Die Seitenwandbearbeitung kann so erfolgen, dass die Seitenwand vollständig, d. h. flächenfüllend, überarbeitet wird. Es kann aber auch so vorgegangen werden, dass das Gesenk vermessen wird und nur dort, wo sich bei der Vermessung Anlagerungen an den Seitenwänden zeigen, die Seitenwandbearbeitung erfolgt. Die Vermessung kann mittels der (nicht gezeigten) Tiefensensorik des Laserbearbeitungskopfs 13 oder mit einer externen Vermessungsvorrichtung erfolgen. Insbesondere ist es möglich, in einem ersten Bearbeitungsdurchlauf die Seitenwand (im gewünschten Bereich) vollständig zu überarbeiten und dabei die mittels der Tiefensensorik gewonnenen Daten entsprechend auszuwerten. Wenn sich zeigt, dass an einer Seitenwand starke Anlagerungen vorhanden waren und auch nach der ersten Seitenwandbearbeitung stehengeblieben sind, kann diese ggf. unmittelbar folgend nochmals überarbeitet werden. Die Tiefensensorik kann dabei so ausgestaltet sein, dass sie das Prozessleuchten auswertet und dabei Rückschlüsse auf die Arbeitstiefe zieht.

Bei der Bearbeitung der Seitenwand kann die Relativlage von Laserkopf 13 und Werkstück 11 anders eingestellt sein als für den schichtweisen Abtrag. Insbesondere kann die Einstellung so erfolgen, dass der Laserstrahl "senkrechter" auf die Seitenwand auftrifft*.* In Fig. 2 würde dies dazu führen, dass der Laserkopf 13 nach rechts bzw. das Werkstück 11 zusammen mit dem Tisch 14 nach links fahren wird.

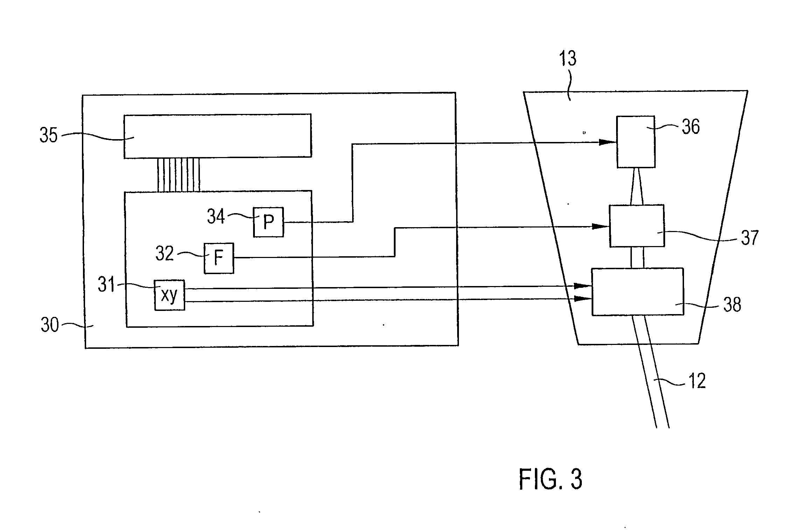

Eine Vorrichtung zur Herstellung eines Gesenks ist schematisch in Fig. 3 gezeigt. Hier wird der Laserkopf 13, der den Laserstrahl 12 aussendet, von einer Ansteuereinrichtung 30 angesteuert. Der Laserkopf 13 weist einen Laser 36 auf, eine Fokussiereinrichtung 37 ("z-Shifter") und eine Ablenkeinheit 38, mit der der Laser in x- und γ-Richtung über die Oberfläche des Gesenks geführt werden kann. Diese Komponenten werden von der Ansteuereinrichtung 30 angesteuert. Die Ansteuereinrichtung 30 weist einen Speicher 35 auf, in dem die Gesenkdaten insbesondere vektoriell oder punktweise oder kombiniert gespeichert sein können. Bezug nehmend auf die im Speicher 35 gespeicherten Daten werden durch eine x-y-Ansteuerung 31 Ansteuersignale für die Ablenkeinrichtung 38 ermittelt, durch die Fokussteuerungseinrichtung 32 Ansteuersignale für die Fokussiereinrichtung 37 und durch die Leistungssteuerung 34 Ansteuersignale für den Laser 36. Wenn die Seitenwandbearbeitung einzusteuern ist, wird der Laserstrahl 12 durch die Ablenksteuereinrichtung 31 mittels der Ablenkeinrichtung 38 über die Seitenwände des Gesenks geführt. Gleichzeitig kann dann über die Fokussiereinrichtung 37 mittels der Fokussteuerung 32 die Defokussierung bewirkt werden, indem die Lage des Fokuspunkts insbesondere in z-Richtung geeignet gesteuert wird, oder es kann die Ausgangsleistung des Lasers 36 mittels der Leistungssteuerung 34 eingestellt werden.

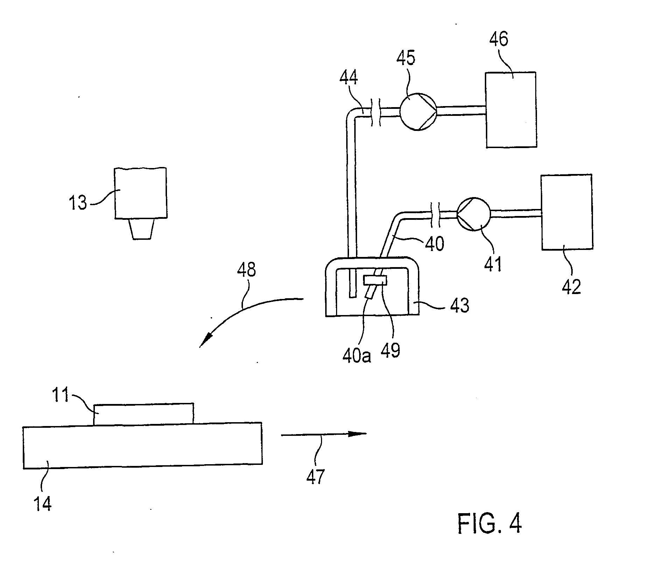

Nachfolgend wird ein Verfahren beschrieben, bei dem die Seitenwandbearbeitung mit einem Bearbeitungsmittel, etwa einem Partikelstrahl und/oder einem Ätzmittel und/oder mittels Trockeneis und/ oder mittels Ultraschall, erfolgt. Es kann anstelle der oder zusätzlich zur Seitenwandbearbeitung mit Laserstrahl eingesetzt werden. Fig. 4 zeigt hierzu schematisch eine Vorrichtung, dort insbesondere die Bezugszeichen 40 - 46.

Das Bearbeitungsmittel kann ein Partikelstrahl sein, etwa ein Sandstrahl mit geeigneter (mittlerer) Korngröße, und/oder ein Ätzmittel, z. B. H₃PO₄, und/oder Trockeneis. Es kann in einem Behälter 42 vorgehalten und mit einer Fördereinrichtung 41, bspw. einer Pumpe, durch eine Führung 40 in den Bereich des Gesenks gebracht werden. Die Führung 40 und insbesondere deren vordere Mündung 40a kann in das schon gefertigte (Teil-) Gesenk eintauchen.

Soweit Trockeneis (insbes. CO₂ in festem Aggregatszustand) verwendet wird, kann ein Strahl, insbesondere ein Gas- bzw. Luftstrahl, mit Trockeneispartikeln darin über die zu überarbeitenden Flächen bzw. Seitenwände hinweg geführt werden. Die Trockeneispartikel können einen mittleren Durchmesser im Bereich zwischen 1 und 4 mm haben. Beim Auftreffen auf die zu bearbeitende Fläche oder kurz davor verdunstet das Trockeneis, und die so frei werdende Energie führt zum Abtrag der zu entfernenden Rückstände.

Soweit Ultraschall für die Seitenwandbearbeitung bzw. -reinigung verwendet wird, kann das Werkstück in ein Flüssigkeitsbad eingetaucht werden. Die Ultraschallbearbeitung kann für sich alleine oder zusätzlich zu den übrigen Maßnahmen herangezogen werden.

Die Führung 40 und insbesondere deren vordere Mündung 40a kann in ihrer Position (x/y/z) und/oder Winkellage bezüglich des Werkstücks 11 einstellbar und/oder während der Seitenwandbearbeitung über Gesenkflächen, insbesondere die Seitenwand oder Bereiche hiervon hinweg automatisch führbar sein. Hierzu kann eine Einstelleinrichtung 49 vorgesehen sein, die im Prozeß automatisch gesteuert die relevanten Positionen einstellt bzw. abfährt. Da ein Bearbeitungsmittel in der Regel räumlich breiter gestreut wirkt als ein Laserstrahl 12, kann die Einstellung der Führung 40 grober erfolgen als die eines Laserstrahls. Es kann eine einmalig Einstellung in Position und/oder Winkellage vor Beginn der Seitenwandbearbeitung ausreichend sein oder auch eine Führung einmal um den Gesenkumfang herum und so über die schon stehende Seitenwand hinweg.

Während der Seitenwandbearbeitung kann überschüssiges Bearbeitungsmittel zumindest von der Maschine, vorzuggsweise auch von Werkstückteilen abgeschirmt werden. Hierzu kann bspw. eine Abschirmeinrichtung 43 vorgesehen sein, mit der das Bearbeitungsmittel zumindest von der Vorrichtung abgeschirmt wird. Sie kann glocken- oder haubenartig ausgelegt sein und bei der Seitenwandbearbeitung auf die Werkstückoberfläche aufgesetzt werden. Die Einstelleinrichtung 49 kann innerhalb der Abschirmeinrichtung 43 vorgesehen sein.

Während der Seitenwandbearbeitung kann überschüssiges Bearbeitungsmittel entfernt, insbesondere abgesaugt werden. Hierzu kann eine Absaugeinrichtung z. B. mit Leitung 44, Pumpe 45 und Auffangbehälter 46 vorgesehen sein.

Zur Seitenwandbearbeitung kann das Werkstück 11 insbesondere zusammen mit dem Tisch 14 vorzugsweise wiederholt automatisch aus dem Arbeitsbereich des Laserstrahls 12 weg und hin in die Nähe der Führung 40 des Bearbeitungsmittels verbracht werden, was durch Pfeil 47 angedeutet ist. Zur Seitenwandbearbeitung kann aber auch die Führung 40 des Bearbeitungsmittels in den Arbeitsbereich des Laserstrahls 12 und somit hin zum Werkstück 11 gebracht werden, Pfeil 48.

Die Seitenwandbearbeitung erfolgt vorzugsweise mehrmals während der Herstellung des Gesenks, bspw. immer nachdem eine gewisse Anzahl von Schichten gefertigt oder ein bestimmtes Volumen abgetragen oder eine bestimmt große Seitenwandfläche freigelegt wurde. Das Hin- und Herwechseln zwischen Gesenkfertigung und Seitenwandbearbeitung erfolgt vorzugsweise vollautomatisch einschließlich der geeigneten Positionierung von Werkstück und/oder ggf. der Führung 40, Abdeckung 43 und Absaugeinrichtung 44 - 46.

## Patentansprüche

1. Verfahren zur Herstellung eines Gesenks in einem Werkstück, bei dem mittels eines Laserstrahls Material abgetragen wird, wobei die Seitenwände des Gesenks mittels eines Laserstrahls und/ oder eines Bearbeitungsmittels bearbeitet werden,
**dadurch gekennzeichnet, daß**
die Seitenwandbearbeitung erfolgt, nachdem bei schichtweisem Materialabtrag mehrere Schichten ohne Seitenwandbearbeitung dazwischen abgetragen wurden.

2. Verfahren nach Anspruch 1, **dadurch gekennzeichnet, daß** die Seitenwände über die gesamte oder einen Teil der Tiefe des Gesenks und/ oder über den gesamten oder einen Teil des Umfangs des Gesenks bearbeitet werden.

3. Verfahren nach einem oder mehreren der vorherigen Ansprüche, **dadurch gekennzeichnet, daß** die Seitenwandbearbeitung mit verringerter Leistung des Laserstrahls und/oder an der Bearbeitungsstelle defokussiert und/oder mit höherer Strahlführungsgeschwindigkeit und/oder mit verringertem Energieeintrag pro Fläche erfolgt.

4. Verfahren nach einem oder mehreren der vorherigen Ansprüche, **dadurch gekennzeichnet, daß** die Seitenwandbearbeitung automatisch nach Maßgabe von Gesenkdaten erfolgt.

5. Verfahren nach einem oder mehreren der vorherigen Ansprüche, **dadurch gekennzeichnet, daß** die Seitenwandbearbeitung mit einer Relativlage von Werkstück und der Laserstrahlquelle erfolgt, die anders ist als die beim schichtweisen Abtrag.

6. Verfahren nach einem oder mehreren der vorherigen Ansprüche, **dadurch gekennzeichnet, daß** die Seitenwand vor der Bearbeitung vermessen wird und die Bearbeitung nach Maßgabe der Vermessung erfolgt.

7. Verfahren nach einem oder mehreren der vorherigen Ansprüche, **dadurch gekennzeichnet, daß** die Herstellung eines Gesenks im Werkstück durch schichtweisen Materialabtrag mittels des Laserstrahls erfolgt.

8. Verfahren zur Herstellung eines Gesenks in einem Werkstück nach einem oder mehreren der vorherigen Ansprüche, **dadurch gekennzeichnet, daß**
die Seitenwände des Gesenks mittels Ultraschall bearbeitet werden.

9. Vorrichtung zur Herstellung eines Gesenks, mit einer Laserbearbeitungseinrichtung (13) für schichtweisen Materialabtrag und einer Ansteuereinrichtung (30) für die Laserbearbeitungseinrichtung, wobei die Ansteuereinrichtung dazu ausgelegt ist, die Laserbearbeitungseinrichtung oder eine Zuführeinrichtung (40 - 42) für ein Bearbeitungsmittel zur Bearbeitung der Seitenwand des Gesenks anzusteuern,
**dadurch gekennzeichnet, daß**
die Ansteuereinrichtung zur Durchführung des Verfahrens nach Anspruch 1 dazu ausgelegt ist, die Seitenwandbearbeitung einzusteuern, nachdem beim schichtweisen Materialabtrag mehrere Schichten ohne Seitenwandbearbeitung dazwischen abgetragen wurden.

10. Vorrichtung nach Anspruch 9, **gekennzeichnet durch** eine Fokussiereinrichtung (32, 37), die den Laserstrahl bei der Seitenwandbearbeitung an der Bearbeitungsstelle defokussiert.

11. Vorrichtung nach Anspruch 9 oder 10, **gekennzeichnet durch** eine Leistungssteuerungseinrichtung (34, 36), die die Laserleistung bei der Seitenwandbearbeitung absenkt.

## Claims

1. A method for producing a cavity in a workpiece, in which material is removed by means of a laser beam, wherein the side walls of the cavity are machined by means of a laser beam and/or a machining means,
**characterised in that**
the side wall machining is performed after a plurality of layers have been removed in a layer-by-layer removal of material without any side wall machining in between.

2. A method according to Claim 1, **characterised in that** the side walls are machined over the entire depth or some of the depth of the cavity and/or over the entire periphery or some of the periphery of the cavity.

3. A method according to either or both of the preceding claims, **characterised in that** the side wall machining is performed at reduced power of the laser beam and/or with defocusing at the machining location and/or at a higher beam guidance velocity and/or with reduced energy input per unit area.

4. A method according to one or more of the preceding claims, **characterised in that** the side wall machining is performed automatically in accordance with cavity data.

5. A method according to one or more of the preceding claims, **characterised in that** the side wall machining is performed with a relative position of the workpiece and the laser source which is different from that during the layer-by-layer removal.

6. A method according to one or more of the preceding claims, **characterised in that** the side wall is surveyed before the machining and the machining is performed in accordance with the survey.

7. A method according to one or more of the preceding claims, **characterised in that** a cavity is produced in the workpiece by the layer-by-layer removal of material by means of the laser beam.

8. A method for producing a cavity in a workpiece according to one or more of the preceding claims, **characterised in that** the side walls of the cavity are machined by means of ultrasound.

9. A device for producing a cavity, having a laser machining device (13) for layer-by-layer removal of material and a control device (30) for the laser machining device, wherein the control device is constructed to control the laser machining device or a supply device (40 - 42) for a machining means for machining the side wall of the cavity,
**characterised in that**
the control device for carrying out the method according to Claim 1 is constructed to trigger the side wall machining after a plurality of layers have been removed in a layer-by-layer removal of material without any side wall machining in between.

10. A device according to Claim 9, **characterised by** a focusing device (32, 37) which defocuses the laser beam at the machining location during the side wall machining.

11. A device according to Claim 9 or 10, **characterised by** a power control device (34, 36) which reduces the laser power during the side wall machining.

## Revendications

1. Procédé de fabrication d'une matrice dans une pièce à usiner au cours duquel de la matière est enlevée par faisceau laser, les parois latérales de la matrice étant usinées par un faisceau laser et/ou un moyen d'usinage,
**caractérisé en ce que**
l'usinage des parois latérales s'effectue après que, lors de l'enlèvement de matière couche par couche, plusieurs couches ont été enlevées sans usinage intermédiaire des parois latérales.

2. Procédé selon la revendication 1, **caractérisé en ce que** les parois latérales sont usinées sur la profondeur totale ou partielle de la matrice et/ou sur la circonférence totale ou partielle de la matrice.

3. Procédé tel que revendiqué dans une ou plusieurs des revendications précédentes, **caractérisé en ce que** l'usinage des parois latérales s'effectue avec une puissance réduite du faisceau laser et/ou de manière défocalisée sur la zone à usiner et/ou avec une une plus grande vitesse de guidage du faisceau laser et/ou avec un rendement énergétique surfacique réduit.

4. Procédé tel que revendiqué dans une ou plusieurs des revendications précédentes, **caractérisé en ce que** l'usinage des parois latérales s'effectue automatiquement en fonction des données de la matrice saisies.

5. Procédé tel que revendiqué dans une ou plusieurs des revendications précédentes, **caractérisé en ce que** l'usinage des parois latérales s'effectue avec une position relative de la pièce à usiner et de la source du faisceau laser différente de celle de l'enlèvement couche par couche.

6. Procédé tel que revendiqué dans une ou plusieurs des revendications précédentes, **caractérisé en ce que** la paroi latérale est mesurée avant l'usinage, et **en ce que** l'usinage s'effectue en fonction des mesures saisies.

7. Procédé tel que revendiqué dans une ou plusieurs des revendications précédentes, **caractérisé en ce que** la fabrication de la matrice dans la pièce à usiner par enlèvement de matière couche par couche s'effectue par faisceau laser.

8. Procédé tel que revendiqué dans une ou plusieurs des revendications précédentes, **caractérisé en ce que** les parois latérales de la matrice sont usinées par ultrasons.

9. Dispositif de fabrication d'une matrice comportant un dispositif d'usinage au laser (13) pour l'enlèvement de matière couche par couche et un dispositif de commande (30) pour le dispositif d'usinage au laser, ledit dispositif de commande étant destiné à piloter le dispositif d'usinage au laser ou un dispositif de guidage (40 - 42) d'un moyen d'usinage pour usiner la paroi latérale de la matrice,
**caractérisé en ce que**
le dispositif de commande permettant l'exécution du procédé selon la revendication 1 est destiné à piloter l'usinage des parois latérales après que, lors de l'enlèvement de matière couche par couche, plusieurs couches ont été enlevées sans usinage intermédiaire des parois latérales.

10. Dispositif selon la revendication 9, **caractérisé par** un dispositif de focalisation (32, 37) qui défocalise le faisceau laser sur la zone à usiner lors de l'usinage des parois latérales.

11. Dispositif selon la revendication 9 ou 10, **caractérisé par** un dispositif de régulation de la puissance (34, 36) qui réduit la puissance laser lors de l'usinage des parois latérales.
